(19) Europäisches Patentamt / European Patent Office / Office européen des brevets

(11) **EP 3 705 250 B1**

(12) **EUROPÄISCHE PATENTSCHRIFT**

(45) Veröffentlichungstag und Bekanntmachung des Hinweises auf die Patenterteilung:
**04.05.2022 Patentblatt 2022/18**

(21) Anmeldenummer: **20159581.6**

(22) Anmeldetag: **26.02.2020**

(51) Internationale Patentklassifikation (IPC):
**B28B 13/02** (2006.01)  **B29C 64/106** (2017.01)

(52) Gemeinsame Patentklassifikation (CPC):
**B28B 13/022; B28B 13/021; B29C 64/106**

(54) **VERFAHREN ZUM HERSTELLEN EINES BETONBAUTEILS UND BETONTEIL-HERSTELLVORRICHTUNG**

METHOD FOR PRODUCING A CONCRETE COMPONENT AND CONCRETE PART PRODUCING DEVICE

PROCÉDÉ DE FABRICATION D'UN COMPOSANT EN BÉTON ET DISPOSITIF DE FABRICATION DE PIÈCE EN BÉTON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2019 DE 102019105596**

(43) Veröffentlichungstag der Anmeldung:
**09.09.2020 Patentblatt 2020/37**

(73) Patentinhaber: **Technische Universität Braunschweig**
**38106 Braunschweig (DE)**

(72) Erfinder:
• **HACK, Norman, Prof. Dr.**
**38100 Braunschweig (DE)**

• **KLOFT, Harald, Prof. Dr.**
**60598 Frankfurt (DE)**
• **LOWKE, Dirk, Prof. Dr.**
**38100 Braunschweig (DE)**

(74) Vertreter: **Gramm, Lins & Partner**
**Patent- und Rechtsanwälte PartGmbB**
**Theodor-Heuss-Straße 1**
**38122 Braunschweig (DE)**

(56) Entgegenhaltungen:
**EP-A1- 1 767 320  WO-A1-2018/187780**
**WO-A2-2015/017421  US-A1- 2018 257 307**

**Beschreibung**

Die Erfindung betrifft ein Verfahren zum Herstellen eines Betonbauteils. Gemäß einem zweiten Aspekt betrifft die Erfindung eine Betonteil-Herstellvorrichtung. Betonbauteile werden entweder in einer Fabrik hergestellt und dann zu einer Baustelle transportiert, wo sie verbaut werden. Alternativ werden Betonbauteile vor Ort aus unausgehärtetem Beton hergestellt. An Betonbauteile wird primär die Anforderung gestellt, dass sie die spezifizierte Last tragen können. Zusätzlich ist es jedoch wünschenswert, dass Betonbauteile möglichst leicht sind. Zudem sollten Betonbauteile möglichst kostengünstig herstellbar sein. Diese Forderung ist in der Regel nicht mit den anderen Forderungen vereinbar. Soll beispielsweise ein Betonbauteil mit einer besonders hohen Festigkeit hergestellt werden, so muss Beton mit erhöhter Festigkeit verwendet werden, der jedoch aufwändiger herzustellen und damit teurer ist. Aus der DE 40 26 009 A1 ist bekannt, einen Draht zu recken, zu schneiden und dann einem Strom aus flüssigem Beton beizugeben, um so eine erhöhte Festigkeit zu erhalten.

Die US 2018/0071949 A1 beschreibt ein Verfahren zum Herstellen eines Bauwerks mittels Gleitschalung, die von einem Roboter positioniert wird. So kann die Form von Gebäuden in stärkerem Maße als bisher variiert werden.

Die EP 1767 320 offenbart ein Verfahren und eine Vorrichtung zum Herstellen eines Betonbauteils, gemäß dem Oberbegriff des Anspruchs 1, bzw. des Anspruchs 11. Sie beschreibt ein Verfahren für die Herstellung dekorierter Fliesen aus Zementschlämme, bei dem eine pigmenthaltige Flüssigkeit mittels einer Düse entlang einer vorgegebenen Bahn in die Zementschlämme eingebracht wird.

Die US 2018/0257307 A1 beschreibt ein 3D-Drucksystem, bei dem in einem Behälter wahlweise Beton und ein Füllstoff eingefüllt werden.

Die WO 2018/187780 betrifft ein System, bei dem ein zu druckendes Material in ein Stützmaterial eingebettet wird. Dabei unterläuft das zu druckende Material einen Phasenwechsel von einer flüssigen zu einer festen Phase durch eine Wechselwirkung der flüssigen Phasen von Stützmaterial und zu druckendem Material.

Die WO 2015/017421 A2 betrifft ein additives Fertigungsverfahren für eingebettete Materialien. In einem Stützmaterial wird ein Strukturmaterial eingebettet und behandelt und im Anschluss das Stützmaterial entfernt.

Der Erfindung liegt die Aufgabe zugrunde, die Fertigung von Betonbauteilen zu verbessern.

Die Erfindung löst das Problem durch ein Verfahren mit den Merkmalen von Anspruch 1.

Gemäß einem zweiten Aspekt löst die Erfindung das Problem durch eine Betonbauteil-Herstellvorrichtung mit den Merkmalen von Anspruch 11.

Vorteilhaft an der Erfindung ist, dass mittels des zweiten Betons, die Eigenschaften des unausgehärteten Betons und damit des späteren Betonbauteils gezielt lokal beeinflusst werden können. So ist es beispielsweise möglich, die Festigkeit des Betonbauteils gezielt lokal zu erhöhen oder die Dichte lokal zu verringern, um das Gewicht des Betonbauteils zu reduzieren. Das ist beispielsweise dann vorteilhaft, wenn das Betonbauteil vorgegebene Abmaße haben muss, die so groß sind, dass die resultierende Festigkeit eines homogenen Betonteils größer ist als die notwendige Festigkeit.

Vorteilhaft ist zudem, dass der zweite Beton genau an den Stellen angebracht werden kann, an denen es benötigt wird.

Im Rahmen der vorliegenden Beschreibung wird unter einem Betonbauteil ein Bauteil verstanden, das in Gewichtsprozenten überwiegend aus Beton besteht. Es kann sich um ein eigenständiges Bauteil oder einen Bestandteil eines Bauwerks handeln. Das Bauteil ist insbesondere aus gradiertem Beton, also aus Beton mit lokal differenzierten Eigenschaften.

Unter unausgehärtetem Beton wird Beton verstanden, der noch nicht formstabil ist.

Unter dem Endeffektor wird insbesondere eine Vorrichtung verstanden, mittels der der zweite Beton auf vorgebbare Weise abgebbar ist. Bei dem Endeffektor handelt es sich beispielsweise um eine Düse. Es ist günstig, nicht aber notwendig, wenn der Endeffektor den zweiten Beton in geometrisch bestimmter Weise einbringt.

Das Einbringen des zweiten Betons entlang der vorgegebenen Trajektorie bedeutet insbesondere, dass sich die Position des Endeffektors in Abhängigkeit von der Zeit auf vorgegebene Weise ändert. In anderen Worten bewegt sich der Endeffektor entlang einer vorgegebenen Kurve mit einer vorgegebenen Geschwindigkeit. Beim Bewegen entlang der Trajektorie gibt der Endeffektor auf vorgegebene Weise den zweiten Beton ab.

Vorzugsweise ist die Flussrate an zweitem Beton, die beispielsweise als Volumen pro Zeiteinheit oder Gewicht pro Zeiteinheit gemessen wird, mit der Trajektorie verknüpft gespeichert. Vorzugsweise besitzt die Betonteil-Herstellvorrichtung einen digitalen Speicher, in dem die Trajektorie gespeichert ist. Insbesondere ist die Steuereinheit ausgebildet zum automatischen Bewegen des Endeffektors entlang der gespeicherten Trajektorie.

Vorzugsweise wird der Endeffektor mittels eines Manipulators bewegt. Der Manipulator ist beispielsweise ein digital steuerbarer Roboter. Alternativ kann es sich bei dem Manipulator auch um eine Portalmaschine handeln.

Vorzugsweise umfasst der Manipulator einen digitalen Speicher, in dem die Trajektorie abgelegt, das heißt gespeichert, ist. Es ist allerdings auch möglich, dass der Manipulator, beispielsweise der Roboter, manuell angesteuert wird, beispielsweise mittels einer entsprechenden Bedieneinheit.

Die Trajektorie ist vorzugsweise eine 3D-Trajektorie. In anderen Worten ändert sich bei Bewegung entlang der Trajektorie auch die z-Koordinate. Die z-Koordinate erstreckt sich in vertikaler Richtung.

Gemäß einer bevorzugten Ausführungsform sind eine Fließgrenze und/oder eine Viskosität des Betons so gewählt, dass der zweite Beton nach dem Einbringen relativ zu seiner Umgebung positionsstabil bleibt. Unter dem Merkmal, dass der zweite Beton relativ zu seiner Umgebung positionsstabil bleibt, wird insbesondere verstanden, dass sich der Beton bewegen kann, beispielsweise weil an einer anderen Stelle Beton hinzugefügt oder entnommen wird, und der zweite Beton sich damit in absoluten Koordinaten, nicht aber relativ zu dem Beton in seiner Umgebung bewegt.

Vorzugsweise wird der zweite Beton so in den unausgehärteten Beton eingebracht, dass es unausgehärteten Beton verdrängt. Es ist auf diese Weise möglich, dass der zweite Beton sich mit dem unausgehärteten Beton beim Erhärten fest verbindet. Der zweite Beton wird in anderen Worten in den unausgehärteten Beton eingedrückt.

Vorzugsweise liegt eine Endeffektor-Geschwindigkeit, mit der der Endeffektor bewegt wird, zwischen einem Drittel, insbesondere der Hälfte, und dem Doppelten, insbesondere dem 1,5-fachen, vorzugsweise dem 1,2-fachen der Austrittsgeschwindigkeit des zweiten Betons aus dem Endeffektor. Dies gilt vorzugsweise für zumindest ein Drittel der Dauer des Einbringens des zweiten Betons.

Vorzugsweise wird der zweite Beton so in den unausgehärteten Beton eingebracht, dass es unausgehärteten Beton, zumindest auch nach oben und/oder unten verdrängt. Hierunter wird in anderen Worten verstanden, dass der zweite Beton den unausgehärteten Beton nicht ausschließlich zur Seite hin verdrängt. Es ist möglich, nicht aber notwendig, dass der Beton ausschließlich nach oben und/oder unten verdrängt wird, das ist aber nicht notwendig, vielmehr kann der Beton sowohl zur Seite hin als auch nach oben und/oder unten verdrängt werden. Günstig ist es, wenn der zweite Beton zumindest 10 Zentimeter unterhalb der Oberfläche des unausgehärteten Betons in den unausgehärteten Betons eingebracht wird.

Gemäß einer bevorzugten Ausführungsform hat der Endeffektor eine Austrittsöffnung, die eine Austrittsquerschnittsfläche hat. Die Quadratwurzel der Austrittsquerschnittsfläche entspricht vorzugsweise höchstens einem Drittel, insbesondere höchstens Viertel, vorzugsweise höchstens einem Fünftel, der Füllhöhe des unausgehärteten Betons. In anderen Worten ist die Querschnittsfläche klein gegenüber der Füllhöhe.

Vorzugsweise hat der unausgehärtete Beton eine nach oben weisende Oberfläche, die sich entlang einer Betonniveaufläche erstreckt, wobei der zweite Beton unterhalb der Betonniveaufläche eingebracht wird. Das führt dazu, dass der zweite Beton sich relativ zum umgebenden Beton nicht oder nur sehr wenig bewegt. Dadurch wird zudem eine innige Verbindung zwischen den beiden unterschiedlichen Betonen ermöglicht.

Günstig ist es, wenn sich zumindest zeitweise ein Abstand des Endeffektors zur Betonniveaufläche ändert. In anderen Worten wird eine echt dreidimensionale Struktur in den unausgehärteten Beton eingebracht.

Gemäß einer bevorzugten Ausführungsform umfasst das Verfahren die Schritte des Einfüllens des unausgehärteten Betons in eine Schalung und danach das Einbringen des zweiten Betons in den unausgehärteten Beton. Die Schalung wird nach dem Erhärten des unausgehärteten Betons vorzugsweise entfernt.

Besonders günstig ist es, wenn das Betonbauteil ein Soll-Volumen hat und eine solche Betonmenge an unausgehärtetem Beton in die Schalung eingebracht wird, dass nach Einbringen des zweiten Betons und Erhärten-Lassen des Betonbauteils das Betonbauteil das Soll-Volumen hat. In anderen Worten wird beim Einbringen des zweiten Betons kein unausgehärteter Beton abgezogen. Alternativ ist es auch möglich, dass unausgehärteter Beton abgezogen wird, wobei vorzugsweise so viel unausgehärteter Beton abgezogen wird, dass sich die Betonniveaufläche nicht ändert. Wird in anderen Worten ein bestimmtes Volumen an zweiten Beton in den unausgehärteten Beton eingebracht, so wird das gleiche Volumen an unausgehärtetem Beton abgezogen.

Der zweite Beton hat eine zweite Zusammensetzung, die sich von einer ersten Zusammensetzung des ersten Betons unterscheidet. Beispielsweise können sich die Zusammensetzungen der Betone so unterscheiden, dass die Betone unterschiedliche Eigenschaften haben, insbesondere unterschiedliche Druckfestigkeiten, Zugfestigkeiten, Dichten, Wärmeleitfähigkeiten, Duktilitäten und/oder Dauerhaftigkeiten. Es ist zudem möglich, dass sich die Zusammensetzungen der Betone so unterscheiden, dass sie unterschiedliche Farben haben, dass ihre Herstellung unterschiedliche Mengen an $CO_2$ freisetzt, oder dass mit der Herstellung der Betone unterschiedliche Kosten verbunden sind.

Es ist günstig, wenn der zweite Beton eine zweite Festigkeit hat, die sich von einer ersten Festigkeit des unausgehärteten Betons unterscheidet. Besonders günstig ist es, wenn die zweite Festigkeit höher ist als die erste Festigkeit des unausgehärteten Betons. Es ist in diesem Fall möglich, Zonen erhöhter Festigkeit in das Innere des Betonbauteils einzubringen. Wenn sich die Festigkeiten unterscheiden, so ist die Festigkeit des festeren Betons zumindest 10 % größer als die Festigkeit des weniger festen Betons. Die Druck- und Zugfestigkeiten werden in Druck-, Zug- oder Biegezugversuchen ermittelt.

Alternativ oder zusätzlich unterscheidet sich die zweite Dichte des zweiten Betons von der ersten Dichte des unausgehärteten Betons.

Der zweite Beton enthält vorzugsweise Fasern, insbesondere Kurzfasern. Ein faserverstärkter Beton hat in der Regel eine höhere Zug-, und/oder Scherfestigkeit und ist daher besonders geeignet für hochbelastete Betonteile oder Teile derartiger Betonteile. Allerdings ist faserhaltiger Beton, der auch als Faserbeton bezeichnet werden könnte, teurer und aufwändiger in der Herstellung, was dessen Einsatz in vielen Anwendungsfällen unattraktiv macht. Zudem sind Fasern dann besonders günstig, wenn sie ausgerichtet sind. Dadurch, dass der zweite Beton nur lokal eingebracht wird, können die Vorteile des Faserbetons genutzt werden, ohne dass der für die Herstellung notwendige Aufwand zu stark ansteigt.

Vorzugsweise sind die Fasern Mineralfasern, insbesondere Glas- und/oder Basaltfasern, Karbonfasern oder Pflanzenfasern. Die Fasern können zudem Mischungen aus zwei oder mehr der vorgenannten Fasern sein. Diese Fasern haben sich als besonders gut zum Verstärken von Beton herausgestellt. Alternativ oder zusätzlich sind die Fasern Stahlfasern oder eine Mischung aus Stahl-, Glas-, Basalt-, Karbon- oder Pflanzenfasern.

Günstig ist es, wenn zusammen mit dem zweiten Beton Fasern in den ersten Beton abgegeben werden, die vom zweiten Beton umgeben sind und dass die Fasern Langfasern oder Endlosfasern sind. Derartige Langfasern, die sich vorzugsweise von einem Ende des Betonbauteils zum anderen erstrecken, sind besonders gut geeignet, um Lasten aufzunehmen. Anders als bei Verfahren nach dem Stand der Technik ist es bei dem erfindungsgemäßen Verfahren möglich, die Fasern in einer im Wesentlichen beliebig vorgebbaren Trajektorie in den Beton einzubringen. Ein weiterer Vorteil ist, dass das Einbringen der Fasern besonders einfach ist. Anders als bei Verfahren gemäß dem Stand der Technik sind beispielsweise keine speziellen Formen notwendig, um die Fasern vor dem Erhärten des Betons zu fixieren.

Um das Gewicht des fertigen Betonbauteils bei gleichbleibenden Außenmaßen zu verringern, ist es günstig, wenn der zweite Beton ein Gas, insbesondere Luft, enthält. Es ist dann möglich, an solchen Stellen den unausgehärteten Beton zumindest teilweise durch Luft zu ersetzen, an denen das Betonteil keine entsprechende Festigkeitseigenschaft haben muss.

Es ist möglich und stellt eine bevorzugte Ausführungsform des erfindungsgemäßen Verfahrens dar, dass zwei unterschiedliche zweite Betone nacheinander in den unausgehärteten Beton eingebracht werden. Es ist beispielsweise möglich, dass die unterschiedlichen zweiten Betone sich in ihren Zusammensetzungen unterscheiden. Es ist zudem möglich, dass einer der zweiten Betone ein Gas oder eine Flüssigkeit enthält.

Eine erfindungsgemäße Betonbauteil-Herstellvorrichtung besitzt vorzugsweise ein Betonlager, das faserhaltigen Beton enthält und das mit der Einbringvorrichtung verbunden ist.

Im Folgenden wird die Erfindung anhand der beigefügten Zeichnungen näher erläutert. Dabei zeigt

Figur 1a      eine erfindungsgemäße Betonbauteil-Herstellvorrichtung zum Durchführen eines erfindungsgemäßen Verfahrens,

Figur 1b      einen schematischen Querschnitt durch ein Betonbauteil, das mit einem erfindungsgemäßen Verfahren hergestellt wurde,

Figur 2a      eine zweite Ausführungsform einer nicht erfindungsgemäßen Betonbauteil-Herstellvorrichtung,

Figur 2b      einen Querschnitt durch ein Betonteil, das mit der Vorrichtung gemäß Figur 2a hergestellt wurde und

Figur 3      ein Detail einer erfindungsgemäßen Betonbauteil-Herstellvorrichtung.

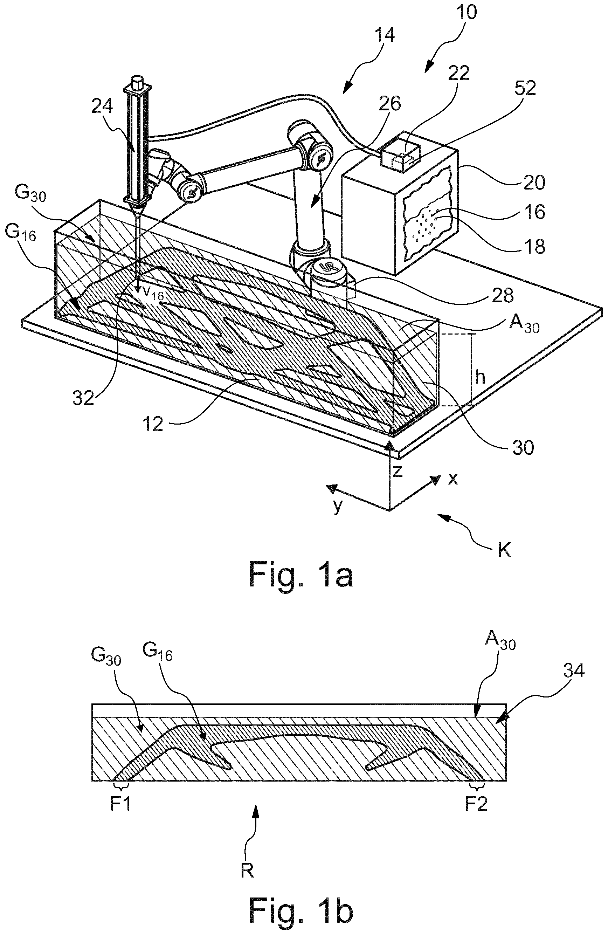

Figur 1a zeigt eine erfindungsgemäße Betonbauteil-Herstellvorrichtung 10, die eine Schalung 12 und eine Einbringvorrichtung 14 zum Abgeben eines zweiten Betons 16 aufweist. Der zweite Beton 16 enthält im vorliegenden Fall Fasern 18 enthält. Der Beton 16 ist in einem Betonlager 20 enthalten und wird mittels einer Betonpumpe 22 zu einem Endeffektor 24 gepumpt. Alternativ kann der Beton 16 im Endeffektor 24 vorgehalten werden. In diesem Fall umfasst der Endeffektor vorzugsweise einen Extruder, insbesondere einen Kolbenextruder.

Der Endeffektor 24 ist an einem Manipulator 26 befestigt, der im vorliegenden Fall durch einen Roboter gebildet ist. Der Manipulator 26 umfasst eine Steuereinheit 28, die einen Prozessor und einen digitalen Speicher aufweist, in dem eine Trajektorie $\vec{r}(t)$ gespeichert ist. Alternativ oder zusätzlich kann die Steuereinheit 28 auch mit einem externen Rechner verbunden sein.

Die Trajektorie $\vec{r}(t)$ beschreibt den Weg, den der Endeffektor 24 beim Durchführen eines erfindungsgemäßen

$$\vec{r}(t)) = \begin{pmatrix} x(t) \\ y(t) \\ z(t) \end{pmatrix}$$

Verfahrens zurücklegt. Die Trajektorie bezieht sich auf ein Koordinatensystem K, dessen z-Achse vertikal verläuft.

In der Schalung 12 ist unausgehärteter Beton 30 enthalten, der zuvor in die Schalung 12 eingefüllt wurde und der sich entlang einer Betonniveaufläche $A_{30}$ erstreckt. Der Endeffektor 24 hat eine Ausgabeöffnung 32, durch die der zweite Beton 16 in den unausgehärteten Beton 30 abgegeben wird. Figur 1a zeigt, dass sich die Ausgabeöffnung 32 zumindest zeitweise, insbesondere die überwiegende Zeit, unterhalb der Betonniveaufläche $A_{30}$ befindet.

Figur 1b zeigt ein Betonbauteil 34 im Querschnitt. Zu erkennen ist das Gebiet $G_{30}$, in dem ausgehärteter erster Beton 30' vorliegt, sowie ein Gebiet $G_{16}$, in dem ausgehärteter zweiter Beton 16 vorliegt. Die beiden Gebiete $G_{30}$ und $G_{16}$ ergänzen einander zum Betonbauteil 34.

Wie Figur 1a zeigt, wird der zweite Beton 16 in den unausgehärteten Beton 30 eingebracht. Dadurch hebt sich die Betonniveaufläche $A_{30}$ an. Nach dem Einbringen des zweiten Betons 16 wird der Endeffektor aus der Schalung 12 herausgefahren und die Betone 16, 30 erhärten, wobei sie sich an den Grenzflächen zueinander miteinander verbinden. Nach dem Erhärten-Lassen hat das Betonbauteil 34 ein Soll-Volumen $V_{soll}$, das vorgegeben war.

Der unausgehärtete, erste Beton 30 hat eine andere Zusammensetzung $Z_{30}$, die sich von einer Zusammensetzung $Z_{16}$ des zweiten Betons 16 unterscheidet. Beispielsweise hat der zweite Beton 16 eine höhere Druckfestigkeit und/oder Scherfestigkeit. Beispielsweise ist der erste Beton 30 ein Normalbeton und der zweite Beton 16 ein faserverstärkter hoch-fester Beton. Ein anderes Beispiel ist, dass der erste Beton 30 ein Leichtbeton und der zweite Beton ein Normalbeton ist.

Figur 1b zeigt, dass das Gebiet $G_{16}$ des ausgehärteten zweiten Betons zusammenhängend ist. In anderen Worten existiert von jedem Punkt des Gebietes $G_{16}$ ein Weg zu jedem beliebigen anderen Punkt des Gebietes $G_{16}$, der durch das Gebiet 16 verläuft. Das ist aber nicht notwendig, beispielsweise kann das Gebiet $G_{16}$ auch zwei, drei oder mehr diskunkte Teil-Gebiete umfassen, beispielsweise Stränge.

Besonders günstig, nicht aber notwendig, ist es, wenn, wie in Figur 1b gezeigt, sich das Gebiet $G_{16}$ bis zu einer Randfläche R erstreckt, im vorliegenden Fall bis zur Unterseite. Vorzugsweise endet das Gebiet $G_{16}$ in einer Auflagerfläche F1 bzw. F2. Die Auflagerfläche ist eine solche Fläche, in der bei der späteren Verwendung des Betonbauteils 34 Kräfte in das Betonbauteil 34 eingeleitet werden.

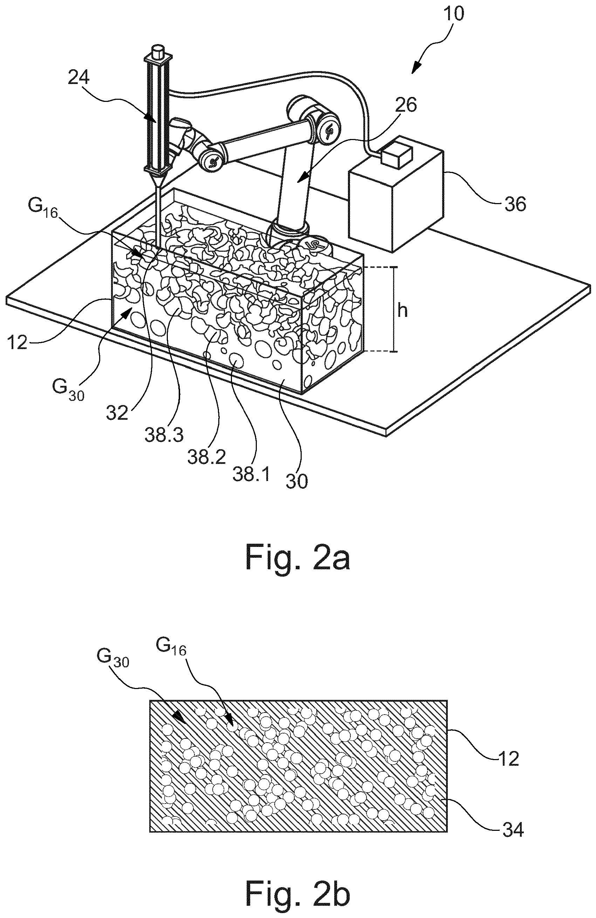

Figur 2a zeigt eine zweite Ausführungsform einer Betonbauteil-Herstellvorrichtung 10, deren Endeffektor 24 mit einer Druckfluidquelle 36 verbunden ist. Die Druckfluidquelle 36 ist im vorliegenden Fall ein Kompressor, mit dem ein Fluid 16 in Form von Druckluft erzeugt wird. Die Druckluft wird durch die Ausgabeöffnung 32 in den unausgehärteten Beton 30 abgegeben, sodass sie eine Vielzahl an Blasen 38.i (i = 1, 2, ...) bilden. Es ist möglich, dass sich zumindest ein Teil der Blasen bis zur Schalung 12 erstrecken. Es ist aber auch möglich und stellt eine bevorzugte Ausführungsform dar, dass sich die Blasen 38.i nicht bis zur Schaltung 12 erstrecken, sodass die Außenfläche des späteren Betonbauteils 34 nicht von der Struktur der Blasen überlagert wird.

Figur 2b zeigt einen Querschnitt durch das fertige Betonbauteil 34.

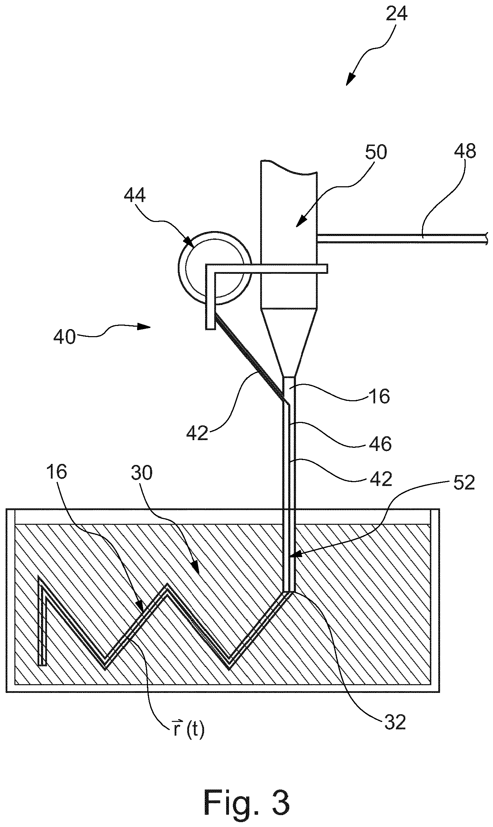

Figur 3 zeigt eine spezielle Ausführungsform eines Endeffektors 24, der einen Langfaser-Einbringkopf 40 aufweist. Eine Langfaser 42, bei der es sich beispielsweise um eine Mineralfaser in Form einer Basaltfaser oder einer Glasfaser handelt, wird von einem Lager 44, im vorliegenden Fall einer Spule, entnommen und einem Mischer 46 zugeführt, in dem die Langfaser 42 mit einem zweiten Beton 16 umgeben wird.

Der zweite Beton 16 wird durch eine Betonleitung 48 zugeführt. Der Endeffektor 24 kann optional eine Betonpumpe 50 aufweisen, mittels der der Beton 16 in den Mischer 46 gedrückt wird. Es ist zudem günstig, nicht aber notwendig, dass der Endeffektor 24 einen Vibrator zum Vibrieren des Mischers 46 aufweist, sodass der zweite Beton 16 in innigen Kontakt mit der Langfaser 42 kommt. Es entsteht so eine betonummantelte Langfaser 52, die durch die Ausgabeöffnung 32 in den unausgehärteten Beton 30 abgegeben wird. Die betonummantelte Langfaser 42 ist nach dem Erhärten des Betonbauteils 34 fest mit dem sie umgebenden Beton verbunden und erstreckt sich entlang der Trajektorie $\vec{r}(t)$.

Figur 1a zeigt, dass der unausgehärtete Beton 30 bis zu einer Füllhöhe h in die Schalung 12 eingefüllt ist. Die Ausgabeöffnung 32 hat eine Austrittsquerschnittsfläche $A_{32}$. Die Quadratwurzel der Austrittsquerschnittsfläche, also

$$\sqrt{A_{32}}$$

, beträgt höchstens einem Viertel der Füllhöhe h des unausgehärteten Betons 30.

Die Steuereinheit 28 besitzt einen digitalen Speicher 52, in dem die Trajektorie $\vec{r}(t)$ gespeichert ist. Zudem ist im digitalen Speicher 52 vorzugsweise Die Geschwindigkeit $|\vec{v}(t)| = |\dot{\vec{r}}(t)|$, mit der der Endeffektor 24 bewegt wird, liegt vorzugsweise zumindest für die überwiegende Zeit des Einbringen des zweiten Betons 16 in den unausgehärteten Beton 30 zwischen dem zwischen der Hälfte und dem 1,2-fachen einer Austrittsgeschwindigkeit $v_{16}$ des zweiten Betons 16 aus dem Endeffektor 24.

### Bezugszeichenliste

| | | | |
|---|---|---|---|
| 10 | Betonbauteil-Herstellvorrichtung | i | Laufindex |
| 12 | Schalung | K | Koordinatensystem |
| 14 | Einbringvorrichtung | R | Randfläche |
| 16 | zweiter Beton | $\vec{r}(t)$ | Trajektorie |
| 18 | Fasern | $V_{soll}$ | Soll-Volumen |

(fortgesetzt)

| Z | Zusammensetzung |
|---|---|
| 20 | Betonlager |
| 22 | Betonpumpe |
| 24 | Endeffektor |
| 26 | Manipulator |
| 28 | Steuereinheit |
| 30 | Beton |
| 32 | Abgabeöffnung |
| 34 | Betonbauteil |
| 36 | Druckluftquelle |
| 38 | Blase |
| 40 | Langfaser-Einbringkopf |
| 42 | Langfaser |
| 44 | Lager |
| 46 | Mischer |
| 48 | Betonleitung |
| 50 | betonummantelte Langfaser |
| 52 | digitaler Speicher |
| $A_{30}$ | Betonniveaufläche |
| F | Auflagerfläche |
| $G_{16}$ | Gebiet ausgeharteten, zweiten Betons |
| $G_{30}$ | Gebiet ausgehärteten, ersten Betons |

**Patentansprüche**

1. Verfahren zum Herstellen eines Betonbauteils (34), mit den Schritten:

   (a) Einbringen eines Fluides (16) in unausgehärteten Beton (30) und
   (b) Erhärten-Lassen des Betons, sodass das Betonbauteil (34) entsteht,
   (c) wobei das Einbringen des Fluides (16) mittels eines Endeffektors (24) erfolgt, der entlang einer vorgegebenen Trajektorie ($\vec{r}(t)$) bewegt wird,
   **dadurch gekennzeichnet, dass**
   (d) das Fluid ein zweiter Beton (16) ist, der eine zweite Zusammensetzung hat, die sich von einer ersten Zusammensetzung des ersten Betons (30) unterscheidet.

2. Verfahren nach Anspruch 1, **dadurch gekennzeichnet, dass**

   (a) eine Fließgrenze und eine Viskosität des Betons so gewählt sind, dass der zweite Beton (16) nach dem Einbringen relativ zu seiner Umgebung positionsstabil bleibt und/oder
   (b) der zweite Beton (16) so in den unausgehärteten Beton (30) eingebracht wird, dass er unausgehärteten Beton verdrängt.

3. Verfahren nach einem der vorstehenden Ansprüche, **dadurch gekennzeichnet, dass**

   (a) der unausgehärtete Beton (30) eine nach oben weisende Oberfläche hat, die sich entlang einer Betonniveaufläche ($A_{30}$) erstreckt und dass
   (b) der zweite Beton (16) unterhalb der Betonniveaufläche ($A_{30}$) eingebracht wird und/oder der Endeffektor (24) eine solche Bewegung ausführt, dass sich dabei zumindest zeitweise ein Abstand des Endeffektors (24) zur Betonniveaufläche ($A_{30}$) ändert.

4. Verfahren nach Anspruch 3, **dadurch gekennzeichnet, dass** das Betonbauteil (34) ein Soll-Volumen ($V_{soll}$) hat und eine solche Beton-Menge an unausgehärtetem Beton (30) in die Schalung (24) eingebracht wird, dass nach Einbringen des zweiten Betons (16) und Erhärten-Lassen das Betonbauteil (34) das Soll-Volumen ($V_{soll}$) hat.

**5.** Verfahren nach einem der vorstehenden Ansprüche, **dadurch gekennzeichnet, dass** der zweite Beton (16) unterhalb einer Oberfläche des unausgehärteten Betons (30) in den unausgehärteten Beton (30) eingebracht wird und dabei unausgehärteter Beton (30) verdrängt wird.

**6.** Verfahren nach einem der vorstehenden Ansprüche, **dadurch gekennzeichnet, dass** der Endeffektor (24) eine Ausgabeöffnung (32) hat, die eine Austrittsquerschnittsfläche hat und die Quadratwurzel der Austrittsquerschnittsfläche höchstens einem Viertel der Füllhöhe des unausgehärteten Betons (30) entspricht.

**7.** Verfahren nach einem der vorstehenden Ansprüche, **dadurch gekennzeichnet, dass**

(a) der zweite Beton (16) Fasern (18) enthält,
(b) wobei die Fasern (18) Mineralfasern sind.

**8.** Verfahren nach einem der vorstehenden Ansprüche, **dadurch gekennzeichnet, dass** zusammen mit dem zweiten Beton (16) Fasern in den ersten Beton abgegeben werden, die vom zweiten Beton (16) umgeben sind.

**9.** Verfahren nach Anspruch 8, **dadurch gekennzeichnet dass** die Fasern Langfasern (42) oder Endlosfasern sind.

**10.** Verfahren nach einem der vorstehenden Ansprüche, **dadurch gekennzeichnet, dass** der zweite Beton (16) ein Gas enthält.

**11.** Betonteil-Herstellvorrichtung (10) mit

(a) einer Einbringvorrichtung (14) zum Abgeben eines zweiten Betons (16) und
(b) einer Schalung (12), die unausgehärteten Beton (30) enthält,
(c) wobei die Einbringvorrichtung (14)

- einen Endeffektor (24) zum Abgeben des zweiten Betons und
- eine Steuereinheit (28) aufweist, die ausgebildet ist zum automatischen Bewegen des Endeffektors (24) entlang einer vorgebbaren Trajektorie ($\vec{r}(t)$),

**dadurch gekennzeichnet, dass**
(d) der Endeffektor (24) einen Langfaser-Einbringkopf (40) aufweist, der angeordnet ist zum Einbringen von zumindest einer Langfaser (42) in den unausgehärteten Beton (30).

**12.** Betonteil-Herstellvorrichtung (10) nach Anspruch 11, **gekennzeichnet durch** eine Beton-Einbringvorrichtung zum automatischen Einbringen von unausgehärtetem Beton (30) in die Schalung bis zu einer vorgegebenen Füllhöhe (h).

**13.** Betonteil-Herstellvorrichtung (10) nach Anspruch 12, **dadurch gekennzeichnet, dass**

(a) der Endeffektor (24) eine Austrittsöffnung hat, die eine Austrittsquerschnittsfläche hat und
(b) die Quadratwurzel der Austrittsquerschnittsfläche höchstens einem Viertel der Füllhöhe entspricht.

**14.** Betonteil-Herstellvorrichtung (10) nach einem der Ansprüche 11 bis 13, **dadurch gekennzeichnet, dass** die Steuereinheit (28) ausgebildet ist zum automatischen Bewegen des Endeffektors (24) mit einer Endeffektor-Geschwindigkeit ($v_{24}$), die zwischen der Hälfte und dem 1,2-fachen der Austrittsgeschwindigkeit ($v_{16}$) des zweiten Betons (16) aus dem Endeffektor (24) liegt.

**Claims**

**1.** A method for producing a concrete element (34) comprising the steps:

(a) introducing a fluid (16) into uncured concrete (30) and
(b) allowing the concrete to set, resulting in the concrete element (34),
(c) wherein the fluid (16) is introduced by means of an end effector (24) that is moved along a predetermined trajectory ($\vec{r}(t)$),
**characterised in that**

(d) the fluid is a second concrete (16) with a second composition that differs from a first composition of the first concrete (30).

2. The method according to claim 1, **characterised in that**

(a) a yield point and viscosity of the concrete are selected in such a way that the second concrete (16) remains position-stable relative to its surroundings following introduction and/or
(b) the second concrete (16) is introduced into the uncured concrete (30) in such a way that it displaces uncured concrete.

3. The method according to one of the preceding claims, **characterised in that**

(a) the uncured concrete (30) has an upward-facing surface that extends along a concrete levelling surface ($A_{30}$) and that
(b) the second concrete (16) is introduced below the concrete levelling surface ($A_{30}$) and/or the end effector (24) conducts a movement that causes a distance of the end effector (24) to the concrete levelling surface ($A_{30}$) to change at least temporarily.

4. The method according to claim 3, **characterised in that** the concrete element (34) has a target volume ($V_{soll}$) and such a quantity of uncured concrete (30) is introduced into the formwork (24) that, after the second concrete (16) has been introduced and allowed to set, the concrete element (34) has the target volume ($V_{soll}$).

5. The method according to one of the preceding claims, **characterised in that** the second concrete (16) is introduced into the uncured concrete (30) below a surface of the uncured concrete (30), thereby displacing uncured concrete (30).

6. The method according to one of the preceding claims, **characterised in that** the end effector (24) has a discharge opening (32) which has an exit cross-sectional area and the square root of the exit cross-sectional area is at most one quarter of the fill level of the uncured concrete (30).

7. The method according to one of the preceding claims, **characterised in that**

(a) the second concrete (16) contains fibres (18),
(b) the fibres (18) being mineral fibres.

8. The method according to one of the preceding claims, **characterised in that** fibres are delivered into the first concrete together with the second concrete (16) and are surrounded by the second concrete (16).

9. The method according to claim 8, **characterised in that** the fibres are long fibres (42) or continuous fibres.

10. The method according to one of the preceding claims, **characterised in that** the second concrete (16) contains a gas.

11. A concrete element production installation (10) with

(a) an insertion device (14) for delivering a second concrete (16) and
(b) a formwork (12) that contains uncured concrete (30),
(c) wherein the insertion device (14) comprises

  - an end effector (24) for delivering a second concrete and
  - a control unit (28) which is designed to automatically move the end effector (24) along a trajectory (f(t)) that can be preset,

**characterised in that**
(d) the end effector (24) features a long fibre insertion head (40), which is arranged to introduce at least one long fibre (42) into the uncured concrete (30).

12. The concrete element production installation (10) according to claim 11, **characterised by**

a concrete insertion device for automatically introducing uncured concrete (30) into the formwork up to a predetermined fill level (h).

**13.** The concrete element production installation (10) according to claim 12, **characterised in that**

(a) the end effector (24) has an exit opening that has an exit cross-sectional surface and
(b) the square root of the exit cross-sectional surface is at most one quarter of the fill level.

**14.** The concrete element production installation (10) according to one of the claims 11 to 13, **characterised in that** the control unit (28) is designed to automatically move the end effector (24) at an end effector speed ($v_{24}$) that is between half and 1.2-times the exit speed ($v_{16}$) of the second concrete (16) from the end effector (24).

**Revendications**

**1.** Procédé de fabrication d'un élément de construction en béton (34), comprenant les étapes consistant à :

(a) introduire un fluide (16) dans du béton non durci (30) et
(b) laisser le béton durcir de manière à obtenir l'élément de construction en béton (34),
(c) l'introduction du fluide (16) étant réalisée au moyen d'un effecteur terminal (24) déplacé le long d'une trajectoire prédéfinie ($\vec{r}(t)$),
**caractérisé en ce que**
(d) le fluide est un deuxième béton (16) ayant une deuxième composition différente d'une première composition du premier béton (30).

**2.** Procédé selon la revendication 1, **caractérisé en ce que**

(a) une limite d'écoulement et une viscosité du béton sont choisies de telle sorte que le deuxième béton (16) reste stable en position par rapport à son environnement, après son introduction, et/ou
(b) le deuxième béton (16) est introduit dans le béton non durci (30) de manière à refouler le béton non durci.

**3.** Procédé selon l'une des revendications précédentes, **caractérisé en ce que**

(a) le béton non durci (30) présente une surface orientée vers le haut qui s'étend le long d'une surface de niveau de béton ($A_{30}$), et **en ce que**
(b) le deuxième béton (16) est introduit en dessous de la surface de niveau de béton ($A_{30}$) et/ou l'effecteur terminal (24) exécute un mouvement tel que la distance entre l'effecteur terminal (24) et la surface de niveau de béton ($A_{30}$) se modifie au moins temporairement.

**4.** Procédé selon la revendication 3, **caractérisé en ce que** l'élément de construction en béton (34) présente un volume de consigne ($V_{soll}$), et une quantité de béton non durci (30) est introduite dans le coffrage (24) de telle sorte qu'après introduction du deuxième béton (16) et durcissement, l'élément de construction en béton (34) présente le volume de consigne ($V_{soll}$).

**5.** Procédé selon l'une des revendications précédentes, **caractérisé en ce que** le deuxième béton (16) est introduit dans le béton non durci (30) en dessous d'une surface du béton non durci (30), et le béton non durci (30) est ainsi refoulé.

**6.** Procédé selon l'une des revendications précédentes, **caractérisé en ce que** l'effecteur terminal (24) présente une ouverture de sortie (32) qui a une surface de section transversale de sortie, et la racine carrée de la surface de section transversale de sortie correspond au maximum à un quart de la hauteur de remplissage du béton non durci (30).

**7.** Procédé selon l'une des revendications précédentes, **caractérisé en ce que**

(a) le deuxième béton (16) contient des fibres (18),
(b) les fibres (18) étant des fibres minérales.

8. Procédé selon l'une des revendications précédentes, **caractérisé en ce que** des fibres sont délivrées dans le premier béton, ensemble avec le deuxième béton (16), qui sont entourées par le deuxième béton (16).

9. Procédé selon la revendication 8, **caractérisé en ce que** les fibres sont des fibres longues (42) ou des fibres sans fin.

10. Procédé selon l'une des revendications précédentes, **caractérisé en ce que** le deuxième béton (16) contient du gaz.

11. Dispositif (10) de fabrication d'éléments en béton, comprenant

  (a) un dispositif d'introduction (14) pour distribuer un deuxième béton (16), et
  (b) un coffrage (12) contenant du béton non durci (30),
  (c) le dispositif d'introduction (14) comprenant

    - un effecteur terminal (24) pour distribuer le deuxième béton, et
    - une unité de commande (28) réalisée pour déplacer automatiquement l'effecteur terminale (24) le long d'une trajectoire prédéfinissable ($\vec{r}(t)$),

  **caractérisé en ce que**
  (d) (d) l'effecteur terminal (24) comporte une tête d'introduction de fibres longues (40) qui est agencée pour introduire au moins une fibre longue (42) dans le béton non durci (30).

12. Dispositif (10) de fabrication d'éléments en béton selon la revendication 11, **caractérisé par** un dispositif d'introduction de béton pour introduire automatiquement du béton non durci (30) dans le coffrage jusqu'à une hauteur de remplissage (h) prédéfinie.

13. Dispositif (10) de fabrication d'éléments en béton selon la revendication 12, **caractérisé en ce que**

  (a) l'effecteur terminal (24) présente une ouverture de sortie qui a une surface de section transversale de sortie, et
  (b) la racine carrée de la surface de section transversale de sortie correspond au maximum à un quart de la hauteur de remplissage.

14. Dispositif (10) de fabrication d'éléments en béton selon l'une des revendications 11 à 13, **caractérisé en ce que** l'unité de commande (28) est réalisée pour déplacer automatiquement l'effecteur terminal (24) à une vitesse d'effecteur terminal ($v_{24}$) qui est comprise entre la moitié et 1,2 fois la vitesse de sortie ($v_{16}$) du deuxième béton (16) hors de l'effecteur terminal (24).

Fig. 1a

Fig. 1b

Fig. 2a

Fig. 2b

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4026009 A1
- US 20180071949 A1
- EP 1767320 A
- US 20180257307 A1
- WO 2018187780 A
- WO 2015017421 A2